# EUROPEAN PATENT SPECIFICATION

(11) **EP 2 976 312 B1**
(45) Date of publication and mention of the grant of the patent: **01.11.2017**
(21) Application number: 14717885.9
(22) Date of filing: 11.03.2014
(51) Int. Cl.: C05D 3/00, C05G 3/00, C05G 3/02

(54) **FOLIAR FERTILIZER AND METHOD FOR MANUFACTURE OF FOLIAR FERTILIZER**
BLATTDÜNGEMITTEL UND VERFAHREN ZUR HERSTELLUNG EINES BLATTDÜNGEMITTELS
ENGRAIS FOLIAIRE ET PROCÉDÉ DE FABRICATION D'ENGRAIS FOLIAIRE

(30) Priority: 12.03.2013 PL 40310613
(43) Date of publication of application: 27.01.2016
(73) Proprietor: Przedsiebiorstwo Wielobranzowe "Vet-Agro" Sp. Z O.O., 20-616 Lublin (PL)
(72) Inventor: MUSIAL, Czeslaw, PL-20-470 Lublin (PL)
(74) Representative: Hladyniuk, Jozef Wawrzyniec
(86) International application number: PCT/PL2014/000022
(87) International publication number: WO 2014/142691

(56) References cited:
- WO-A2-2007/124612
- DE-A1-102010 008 504
- JP-A- H04 202 080
- JP-A- H05 139 872
- US-A- 3 404 987
- US-A1- 2004 167 220

## Description

The subject of the invention is a foliar fertilizer, designed especially for fruit trees, and a method for its manufacture.

The patent description PL208193 B1 discloses a foliar calcium fertilizer in the form of an aqueous solution that contains calcium salts of organic acids, including acetate and formate, as well as calcium salts of inorganic acids, including nitrate and chloride. The state of the art in that patent specification also cites information known from Japanese patent specifications, where fertilizers containing calcium propionate in a powder form are described. These fertilizers are, however, difficult to dissolve in water, and the solutions obtained have small concentrations. Further, from U.S. patent specification no. 5,198,254 there is known use of calcium propionate in an amount up to 1% as a preservative in a protective composition for previously harvested fruits and vegetables.

From the description DE 10 2010 008 504 A1 there is known a plant treatment agent containing calcium, nanoscale silver and a formate, especially calcium formate. The agent according to an example contains 75% by weight of calcium formate, 13% by weight of calcium chloride 10%, 2% of wetting agents and nanoscale silver. Actually it is a calcium preparation with the addition of nanoscale silver. This preparation is diluted in water before use and is sprayed onto disease-affected ornamental and fruit trees during the blooming phase.

Also known are biocidal properties of silver hydrocolloids.

The essence of the foliar fertilizer in the form of an aqueous solution containing calcium salts of organic acid, according to the present invention, consists in that it contains 10-40% by weight of calcium propionate, additives in an amount up to 1% and a hydroxyethyl- or hydroxypropyl cellulose-stabilised nanoscale silver hydrocolloid in an amount up to 100. Preferably, the fertilizer contains known salts and microcomponents.

The essence of the method for the preparation of the foliar fertilizer, where calcium salts are dissolved in water, is characterized in that calcium salts are dissolved in a silver hydrocolloid. However, after the dissolution of calcium salts in the silver hydrocolloid, preferably known salts and microcomponents are added to the solution and the whole resultant mixture is agitated until the components react completely.

The essence of the invention is also the application of the preparation containing 10-40% by weight of calcium propionate, additives in an amount up to 1% and a hydroxyethyl- or hydroxypropyl cellulose-stabilized nanoscale silver hydrocolloid in an amount of up to 100 to manufacture a fertilizer for foliar application on fruit trees.

Unexpectedly, it turned out that calcium propionate dissolves well in the nanoscale silver hydrocolloid, as a result of which it turned out possible to obtain a foliar fertilizer containing calcium propionate and, at the same time, forming a protective film to protect fruits both during the growing season as well as post-harvest.

The fertilizer according to the invention is presented in the following examples.

### Example I

Into a mixer there was added 71 kg of 35 ppm Ag nanoscale silver hydrocolloid stabilized with 0.5% hydroxyethylcellulose, and, with agitation, 28.5 kg of calcium propionate and 0.5 kg of acetic acid was added. After the ingredients had been dissolved, 100 kg of fertilizer containing 6% of calcium and 25ppm of nanoscale silver was obtained. The fertilizer did not contain chlorides or nitrates.

### Example II

Into a mixer there was added 73 kg of nanoscale silver hydrocolloid having Ag concentration of 35 ppm, stabilized with 0.3% hydroxypropylcellulose, and, while agitating, there was added 25 kg of calcium propionate, 0.5 kg of acetic acid, 0,3 kg of non-ionic surfactant (trade name PLANTACARE, a 50% solution of C8-16 alkyl glycosides). After a clear solution was obtained, there was added 115 g of boric acid and 894 g of disodium versenate, and then 390 g of manganese acetate dihydrate, 168 g of zinc acetate dihydrate and 32 g of copper acetate monohydrate.

The reactor content was agitated until dissolution and reaction of components. There was obtained 100 kg of fertilizer containing 5.3 % of calcium, 25.5 ppm of nanoscale silver, and 0.02% boron, 0.08% manganese, 0.05% zinc and 0.01% copper. The fertilizer thus obtained did not contain nitrates or chlorides.

### Example III

Into a mixer there was introduced 50 kg of nanoscale silver hydrocolloid having a concentration of 50 ppm Ag, stabilized with hydroxyethylcellulose having a concentration of 1%, and then 6.5 kg of water, 20 kg of calcium propionate and 20 kg of calcium chloride hexahydrate as well as 100 g of 36% concentrated hydrochloric acid was added. After dissolution of the ingredients, 0.3 kg of non-ionic surfactant solution (50% alkylglycosides solution) was added along with 1360 g of disodium versenate, 284 g of boric acid and 2 kg of a mixture of chlorides of copper, manganese and zinc, said mixture obtained by dissolving 215 g of manganese carbonate, 125 g of zinc oxide and 36 g of basic copper carbonate in 1780 g of a 15% solution of hydrochloric acid. The contents was agitated for one hour until the reaction was complete. The result was 100 kg of a fertilizer containing 7,8% of calcium, 25 ppm of nanoscale silver and 0.1% of manganese, 0,1% of zinc, 0.05% of boron, 0.02% of copper and 6.7% of chlorides.

### Example IV - reference

At the end of the growing season, during the fruiting phase, an experiment in an orchard was conducted using a fertilizer according to Example 1, which was sprayed onto 10-year old apple trees Jonika/M.9. The spacing of the trees was 3.5 x 1.5 metres.

The fertilizer was used after dilution in water at a ratio 1:300 L. The dose of the working solution of the fertilizer was 300 L/ha. The operation was carried out three times in two-week intervals.

In the reference test combination the trees were not sprayed.

In the combination with the fertilizer, there has been found a yield increase of apples from one tree at 12.5 to 19.8 kg, that is in statistically reasonable range, whereas fertilizer applications had practically no effect on the average weight of a single fruit.

The treatment of trees with the fertilizer favourably increased the amount of fruits in size ranges of 6.6-7.0 and 7.1-7.5 cm, and reduced the amount of fruits with a size greater than 8 cm, however, it did not improve the fruit equalization coefficient.

The fertilizer tested modified fruit colour, causing an increase in the yield of apples with the most extensive red blush with simultaneous beneficial change of apple colour coefficient.

The fertilizers applied did not principally affect the firmness of the apples. However, extract content in the fruits from trees where the fertilizer applied was slightly lower than that in apples from the reference test trees. Further, calcium (Ca) content in both reference-test and fertilizer-sprayed fruit trees was very similar.

The fertilizer advantageously modified the apples' storage performance in cold storage. After a 110-day storage period it turned out that in a lot of apples harvested from the reference test combination 75% of the fruits survived, but in a lot of 100 apples harvested from trees treated with the fertilizer 87% of the fruit was suitable for trade.

To sum up, the application of the fertilizer according to the invention contributes, on the one hand, to a significant increase in yield, and, on the other hand, to reducing storage losses, which consequently results in a significant increase in fruits suitable for trade during winter.

## Claims

1. A foliar fertilizer in the form of an aqueous solution containing calcium salts of organic acid, **characterized in that** it contains 10-40% by weight of calcium propionate, additives in an amount up to 1% and a hydroxyethyl- or hydroxypropyl cellulose-stabilized nanoscale silver hydrocolloid in an amount up to 100.

2. The fertilizer according to claim 1, **characterized in that** it contains known salts and microcomponents.

3. A method for the preparation of a foliar fertilizer according to claim 1 where calcium salts are dissolved in water, **characterized in that** calcium propionate salts are dissolved in a silver hydrocolloid and, after the dissolution of calcium propionate in the silver hydrocolloid, the known salts and the microcomponents are added to the solution and the whole resultant mixture is agitated until the components react completely.

4. The application of the preparation containing 10-40% by weight of calcium propionate, additives in an amount up to 1% and a hydroxyethyl- or hydroxypropyl cellulose-stabilized nanoscale silver hydrocolloid in an amount up to 100 to manufacture a fertilizer for foliar application on fruit trees.

## Patentansprüche

1. Der Blattdünger in Form einer Kalziumsalze der organischen Säure enthaltenden Wasserlösung **gekennzeichnet dadurch, dass** er 10-40 Gewichtsprozent des Kalziumpropionats, Hilfsmittel in einer Menge von 1% sowie das Hydrokolloid des Nanosilbers stabilisiert mit Hydroxyethylzellulose oder Hydroxypropylzellulose in einer Menge von 100 beinhaltet.

2. Ein Dünger dem Anspruch 1 gemäß, **dadurch gekennzeichnet, dass** er bekannte Salze und Mikrobestandteile beinhaltet.

3. Die Art und Weise, den Blattdünger zu gewinnen, dem Anspruch 1 gemäß, wo die Kalziumsalze im Wasser aufgelöst werden, **dadurch gekennzeichnet, dass** die Kalziumpropionatssalze im Silberhydrokolloid aufgelöst werden, wonach nach der Auflösung der Kalziumsalze im Silberhydrokolloid bekannte Salze sowie Mikrobestandteile in die Lösung eingeführt werden und das Ganze dann bis auf den vollständigen Umsatz der Bestandteile gemischt wird.

4. Die Verwendung des 10-40 Gewichtsprozent des Kalziumpropionats, Hilfsmittel in einer Menge von 1% sowie das Hydrokolloid des Nanosilbers stabilisiert mit Hydroxyethylzellulose oder Hydroxypropylzellulose in einer Menge von 100 beinhaltenden Präparats für Fertigung eines Düngers zur Eintragung auf die Blätter von Obstbäumen.

## Revendications

1. Engrais foliaire sous forme de solution aqueuse contenant des sels de calcium d'acide organique, ladite composition **caractérisée en ce qu'**elle contient de 10 % à 40 % en poids de propanoate de calcium, jusqu'à 1 % en poids d'excipents ainsi que de l'hydrocolloïde de nano-argent, stabilisé par de l'hydroxyéthylcellulose ou de l'hydroxypropylcellulose, qui complète le tout jusqu'à 100 %.

2. Engrais selon la revendication 1 **caractérisé en ce qu'**il contient des sels connus ainsi que des micro-éléments.

3. Mode d'obtention de l'engrais foliaire selon la revendication 1 où les sels de calcium sont dissous dans de l'eau **caractérisé en ce que** les sels de propanoate de calcium sont dissous dans de l'hydrocolloïde de nano-argent après quoi, une fois les sels de calcium dissous dans de l'hydrocolloïde de nano-argent, on introduit dans la solution des sels connus ainsi que des micro-éléments et l'on mélange le tout jusqu'à ce que les ingrédients cessent de réagir.

4. Utilisation de la préparation contenant de 10 % à 40 % en poids de propanoate de calcium, jusqu'à 1 % en poids d'excipients ainsi que de l'hydrocolloïde de nano-argent, stabilisé par de l'hydroxyéthylcellulose ou de l'hydroxypropylcellulose, qui complète le tout jusqu'à 100 % afin de produire un engrais à appliquer sur les feuilles d'arbres fruitiers.
